# EUROPEAN PATENT APPLICATION

(11) **EP 4 656 486 A1**
(43) Date of publication of application: **03.12.2025**
(21) Application number: 24762912.4
(22) Date of filing: 24.01.2024
(51) Int. Cl.: B60W 50/04, B60W 60/00

(54) **DATA MONITORING METHOD AND APPARATUS**

(30) Priority: 28.02.2023 CN 202310230099
(71) Applicant: Shenzhen Yinwang Intelligent Technologies Co., Ltd., Shenzhen, Guangdong 518110 (CN)
(72) Inventor: HE, Yue, Shenzhen, Guangdong 518129 (CN); LIU, Jianqin, Shenzhen, Guangdong 518129 (CN); GAI, Jiyu, Shenzhen, Guangdong 518129 (CN)
(74) Representative: Gill Jennings & Every LLP
(86) International application number: PCT/CN2024/073801
(87) International publication number: WO 2024/179229

(57) **Abstract**

A data monitoring method and apparatus are provided. The method includes: obtaining a preset condition that a vehicle should meet to enable a vehicle function on a target road section, where the preset condition includes a preset element and a requirement description of the element; collecting a current status of the element at a preset frequency; and adjusting the preset frequency based on a result obtained by the collecting. Adaptive adjustment of a collection frequency of an element associated with enabling of the vehicle function is implemented. This helps improve a monitoring level of the element and safety of an automated driving system.

## Description

This application claims priority to Chinese Patent Application No. 202310230099.3, filed with the China National Intellectual Property Administration on February 28, 2023 and entitled "DATA MONITORING METHOD AND APPARATUS", which is incorporated herein by reference in its entirety.

### TECHNICAL FIELD

This application relates to the field of automated driving, and in particular, to a data monitoring method and apparatus.

### BACKGROUND

In an automated driving scenario, many elements are related to safe operation of an automated driving system of a vehicle, and these elements need to be monitored. For example, an expected operational design condition (ODC) is important reference information for ensuring normal startup and safe operation of the automated driving system of the vehicle.

A current manner of monitoring an element associated with safe operation of the automated driving system is Inefficient, resulting in a low monitoring level.

### SUMMARY

This application discloses a data monitoring method and apparatus, to implement adaptive adjustment of a collection frequency of an element associated with enabling of a vehicle function. This helps improve a monitoring level of the element and safety of an automated driving system.

According to a first aspect, this application provides a data monitoring method. The method includes: obtaining a preset condition that a vehicle should meet to enable a vehicle function on a target road section, where the preset condition includes a preset element and a requirement description of the element; collecting a current status of the element at a preset frequency; and adjusting the preset frequency based on a result obtained by the collecting.

For example, the method may be applied to a first device. The first device may be a network-side device, a vehicle, or a processing apparatus in the vehicle. The network-side device may be, for example, a server deployed on a network side (for example, a server or a cloud platform used for data monitoring), or a component or a chip in the server. The processing apparatus in the vehicle may be a software and hardware integrated platform, namely, a vehicle-mounted computing platform, for supporting intelligent driving, for example, a mobile data center (MDC), an advanced driver assistance system domain controller (ADAS DC), or an automatic drive domain controller (AD DC), and may alternatively be a software and hardware integrated platform that supports vehicle body control and chassis control, for example, a vehicle domain controller (VDC).

For example, the element may be understood as an attribute, a status, or the like that is associated with the vehicle function.

For example, when the preset condition is an operational design domain (ODD), the ODD may be classified into a "static entity", an "environmental condition", and a "dynamic entity". Elements belonging to the "static entity" include but are not limited to at least one ODD element of a road type, a road surface, road geometry, lane intersection, a lane feature, a traffic sign, a road edge, a road facility, and the like. Elements belonging to the "environmental condition" include but are not limited to at least one ODD element of weather, illumination, connectivity, and the like. Elements belonging to the "dynamic entity" include but are not limited to at least one ODD element of a traffic status, a road user, a non-road user, and the like. In some possible embodiments, an ODD element may alternatively be obtained in a finer division manner than the above.

Herein, the operational design domain ODC includes the ODD, an occupant status, a vehicle status, and another necessary condition. For example, when the preset condition is the operational design domain ODC, in addition to the ODD element, elements in the preset condition include elements corresponding to the occupant status, the vehicle status, and the another necessary condition.

For example, the requirement description of the element may be understood as a constraint, a requirement, or a limitation on the element. The requirement description of the element may be represented by a text description, a value, a value range, a character, a character string, a character string set, a discrete value set, or another manner.

For example, when a vehicle function A is enabled, a requirement description of an element "visibility" is "≥ 2 km", a requirement description of an element "lane feature" is "clear marking", a requirement description of an element "lane direction" is "drive on the right", a requirement description of an element "raining" is "daily precipitation ≤ 10 mm", and a requirement description of an element "road user" is "no pedestrian".

Herein, the target road section may be, for example, at least one section of a highway or at least one section of an urban expressway, or may be at least one section of a road from a current location of the vehicle to a parking space in an outdoor parking lot, or at least one section of a road from a current location of the vehicle to a parking space in an indoor parking lot.

Herein, the preset condition is prior information.

For example, the preset condition includes but is not limited to an operational design condition ODC and an operational design domain ODD.

A data source end of the preset condition includes at least one of a vehicle, a sensing system in the vehicle, a network-side device, and a roadside device. The network-side device may be, for example, a server (for example, a server or a cloud platform for data monitoring) deployed on a network side, or a component or a chip in the server. The roadside device may be, for example, an apparatus like a roadside unit (roadside unit, RSU), multi-access edge computing (multi-access edge computing, MEC), a sensor, or a component or a chip inside these apparatuses, or may be a system-level device including more of an RSU, MEC, and a sensor. The sensor includes at least one of a lidar, a millimeter-wave radar, an image shooting apparatus, a roadside speed measurement apparatus, and the like.

In the foregoing method, adaptive adjustment of a collection frequency of an element is implemented based on a collection status of a real-time status of the element and a requirement description that is of the element and that is required when the vehicle function is enabled on the target road section. This helps save resources, and helps improve collection efficiency and a monitoring level of the element.

Optionally, the vehicle function includes but is not limited to an automated driving function and an assisted driving function. In this way, in an automated driving scenario or an assisted driving scenario, a collection frequency of an element can be adjusted in a timely manner, to improve collection efficiency and a monitoring level of the element.

Optionally, the preset condition is an operational design condition ODC or an operational design domain ODD. In other words, the method provided in this application may be used for ODC monitoring and ODD monitoring.

Optionally, the result indicates a quantity of times a status of the element changes in a unit time, or indicates a priority of the element.

For example, the term "change" may be understood as that two adjacent statuses of the element that are collected in a unit time are different, or a difference between two adjacent statuses of the element that are collected in a unit time is greater than a preset difference threshold, or a status, of the element, collected in a unit time does not match a requirement description of the element.

For example, the quantity of times the status of the element changes in the unit time may be a quantity of times the status of the element does not match the requirement description of the element in the unit time. In this way, statistics on reasons for exiting an automated driving system are collected, so that a reference can be provided for adjusting the collection frequency of the element, to determine whether the current preset frequency of the element is proper.

For another example, the quantity of times the status of the element changes in the unit time may alternatively be a quantity of times the difference between two adjacent statuses of the element is greater than the preset difference value in the unit time. In this way, an element whose status changes greatly may be identified, and an element whose status changes frequently in a current unit time may be obtained based on the foregoing result.

Optionally, the element includes a first element and a second element, and the preset frequency includes a first frequency and a second frequency that are different; and collecting the current status of the element at the preset frequency includes: collecting a current status of the first element at the first frequency, and collecting a current status of the second element at the second frequency.

In the implementation of the foregoing manner, different elements may correspond to different preset frequencies. This can better comply with a change characteristic of an element, saves resources (for example, a computing resource and a storage resource), and helps improve monitoring efficiency of the element.

Optionally, adjusting the preset frequency based on the result obtained by the collecting includes: sending adjustment information, where the adjustment information indicates to adjust the preset frequency based on the result obtained by the collecting, and the adjustment information includes the result.

In the implementation of the foregoing manner, the adjustment information may be sent to indicate a device other than the first device to adjust the preset frequency of the element. For example, a transmit end of the adjustment information is a network-side device. That is, the network-side device undertakes a task of obtaining the result through computing. In this case, an execution device for adjusting the preset frequency only needs to serve as a receive end of the adjustment information. This helps save computing resources of the execution device.

According to a second aspect, this application provides a data monitoring apparatus. The apparatus includes: an obtaining unit, configured to obtain a preset condition that a vehicle should meet to enable a vehicle function on a target road section, where the preset condition includes a preset element and a requirement description of the element; and a processing unit, configured to: collect a current status of the element at a preset frequency, and adjust the preset frequency based on a result obtained by the collecting.

Optionally, the vehicle function is an automated driving function or an assisted driving function.

Optionally, the preset condition is an operational design condition ODC or an operational design domain ODD.

Optionally, the result indicates a quantity of times a status of the element changes in a unit time, or indicates a priority of the element.

Optionally, the element includes a first element and a second element, and the preset frequency includes a first frequency and a second frequency that are different; and the processing unit is specifically configured to: collect a current status of the first element at the first frequency, and collect a current status of the second element at the second frequency.

Optionally, the processing unit is specifically configured to send adjustment information, where the adjustment information indicates to adjust the preset frequency based on the result obtained by the collecting, and the adjustment information includes the result.

According to a third aspect, this application provides a data monitoring apparatus. The apparatus includes a processor and a memory, where the memory is configured to store program instructions, and the processor invokes the program instructions in the memory, so that the apparatus performs the method according to any one of the first aspect or the possible implementations of the first aspect.

According to a fourth aspect, this application provides a computer-readable storage medium, including computer instructions. When the computer instructions are run by a processor, the method according to any one of the first aspect or the possible implementations of the first aspect is implemented.

According to a fifth aspect, this application provides a computer program product. When the computer program product is executed by a processor, the method according to any one of the first aspect or the possible implementations of the first aspect is implemented. For example, the computer program product may be a software installation package. When the method provided in any possible design of the first aspect needs to be used, the computer program product may be downloaded and executed on the processor, to implement the method according to any one of the first aspect or the possible implementations of the first aspect.

According to a sixth aspect, this application provides a vehicle. The vehicle includes the apparatus according to any one of the second aspect or the possible implementations of the second aspect, or the data monitoring apparatus according to the third aspect.

Technical effects of the second aspect to the sixth aspect are the same as those of the first aspect. Details are not described herein again.

### BRIEF DESCRIPTION OF DRAWINGS

FIG. 1 is a diagram of an architecture of a data monitoring system according to an embodiment of this application;
FIG. 2 is a flowchart of a data monitoring method according to an embodiment of this application;
FIG. 3 is a diagram of a scenario according to an embodiment of this application;
FIG. 4 is a diagram of a structure of a monitoring apparatus according to an embodiment of this application; and
FIG. 5 is a diagram of a structure of a monitoring device according to an embodiment of this application.

### DESCRIPTION OF EMBODIMENTS

It should be noted that prefix words such as "first" and "second" are used in this application only to distinguish between different described objects, and do not constitute any limitation on locations, a sequence, priorities, quantities, content, or the like of the described objects. For example, if the described objects are "fields", ordinal numbers before "field" in a "first field" and a "second field" do not limit locations or a sequence of the "fields", and "first" and "second" do not limit whether "field" modified by "first" and "field" modified by "second" are in a same message, and do not limit a sequence of the "first field" and the "second field". For another example, if the described objects are "levels", ordinal numbers before "level" in a "first level" and a "second level" do not limit priorities of the "levels". For another example, a quantity of described objects is not limited by a prefix word, and may be one or more. A "first device" is used as an example, where a quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix words used to distinguish between the described objects in embodiments of this application does not constitute a limitation on the described objects. For descriptions of the described object, refer to the context descriptions in the claims or embodiments, and use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

For ease of understanding, the following first describes related terms that may be used in embodiments of this application.

### (1) Automated driving

Automated driving may also be referred to as intelligent driving or assisted driving, and is an important direction of intelligent development of vehicles. With development of sensing technologies and improvement of chip capabilities, intelligent driving provides more abundant driving functions for people, and gradually implements driving experience of different levels. There are a plurality of classification manners for an automated driving system. For example, the society of automotive engineers (society of automotive engineers, SAE) provides a driving automation classification standard, including driving levels L0 to L5. The level L0 is no automation, the level L1 is driver assistance, the level L2 is partial automation, the level L3 is conditional automation, the level L4 is high automation, and the level L5 is full automation. For another example, vehicle automation classification proposed by the Ministry of Industry and Information Technology of China includes six levels of vehicle driving automation, where levels 0 to 2 means driver assistance, in which a system assists a human in performing a dynamic driving task, and a driving subject is still a driver; and levels 3 to 5 means automated driving, in which a system performs a dynamic driving task in place of a human in an operational design condition, and a driving subject is the system when a function is activated.

It may be understood that regardless of which classification manner is used, descriptions in embodiments of this application may be applied to different classification cases.

### (2) Operational design domain ODD

The operational design domain (operational design domain, ODD) is an external environmental condition that is determined when an automated driving system is designed and that is applicable to operation of functions of the automated driving system. For example, a specified condition may include a geographical location, a road type, a speed range, weather, time, and national and local traffic laws and regulations. A highway pilot (Highway Pilot, HWP) is used as an example. The system recognizes that a vehicle is within the ODD (for example, the vehicle is currently traveling on a highway, the weather is clear, the vehicle is at an appropriate speed, an illumination condition is good, and a global positioning system (global positioning system, GPS) signal is stable), and the HWP system continuously executes all the dynamic driving tasks after a driver confirms that the system is activated.

### (3) Operational design condition ODC

The operational design condition (operational design condition, ODC) is a general term of various conditions that are determined when an automated driving system is designed and that are applicable to operation of functions of the automated driving system, including an operational design domain ODD and an internal condition that is further to be met for safe startup and operation of the system, for example, a vehicle status, an occupant status, and another necessary condition, for example, a traffic condition and an operation condition.

ODDs of different automated driving systems are different. For example, in an automated driving system at a high speed, a system A can be started and run only in the daytime, and a system B can be started and run in the daytime and at a sunny night.

The vehicle status includes a vehicle speed and a function status, where the function status includes a software and hardware status. The vehicle speed includes an activation speed range, and whether the current automated driving system can be activated is determined based on the activation speed range. Before the safe startup and operation of the automated driving system, the vehicle status need to meet a condition for the safe startup and operation of the automated driving system. For example, the automated driving system at the high speed needs to have a function self-check capability, and needs to perform a function self-check before startup. A sensing function status, a positioning function status, and a computing function status need to meet a system design requirement.

Occupants include a driver/dynamic driving task support user and a passenger, and the occupant status includes a status attribute of monitoring the driver/dynamic driving task support user and the passenger. For example, whether the driver is fatigued, drives drunk, or wears a safety belt is monitored. In this way, whether the vehicle has a driving risk can be determined. For another example, whether the dynamic driving task support user is in a fatigue state, a drunk driving state, or the like is monitored, to determine whether the dynamic driving task support user can take over. For still another example, whether the passenger has a behavior of attempting to seize an automated driving device is monitored, so that whether the current automated driving system can run safely can be determined.

The following describes technical solutions of this application with reference to accompanying drawings.

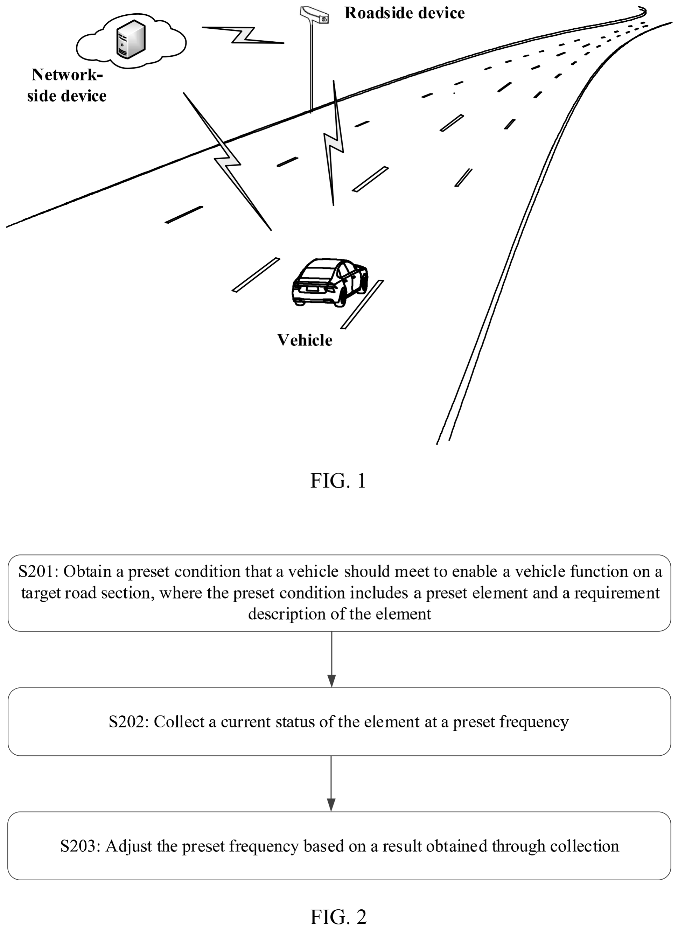

FIG. 1 is a diagram of an architecture of a data monitoring system according to an embodiment of this application. As shown in FIG. 1, the system includes a vehicle, a network-side device, and a roadside device. Communication may be performed in a wireless manner between the vehicle and network-side device, between the vehicle and the roadside device, and between the network-side device and the roadside device.

The network-side device may be, for example, a server (for example, a server or a cloud platform for data monitoring) deployed on a network side, or a component or a chip in the server. The network-side device may be deployed in a cloud environment, that is, may be a cloud computing server. Alternatively, the network-side device may be deployed in an edge environment, that is, may be an edge computing server. The network-side device may be an integrated device, or may be a plurality of distributed devices. This is not specifically limited in embodiments of this application.

The roadside device is an apparatus that can communicate with the vehicle by using a V2X technology. The roadside device may be, for example, an apparatus like a roadside unit (roadside unit, RSU), multi-access edge computing (multi-access edge computing, MEC), a sensor, or a component or a chip inside these apparatuses. The sensor includes at least one of a lidar, a millimeter-wave radar, an image shooting apparatus, a roadside speed measurement apparatus, and the like. In some possible embodiments, the roadside device may alternatively be a system-level device including more of an RSU, MEC, and a sensor. This is not specifically limited herein.

Herein, the vehicle is an automated driving vehicle. That is, the vehicle is configured with an automated driving system, and the automated driving system may independently perform some driving operations. Depending on different power sources of the vehicle, the vehicle may be, for example, a new energy vehicle or a conventional vehicle. The conventional vehicle means a fuel vehicle, for example, may be a gasoline vehicle or a diesel vehicle. The new energy vehicle may be, for example, an electric vehicle (electric vehicle, EV), a hybrid vehicle (hybrid electric vehicle, HEV), a range extended electric vehicle (range extended EV), a plug-in hybrid vehicle (Plug-in HEV), a fuel cell vehicle, or another new energy vehicle. This is not specifically limited herein.

A sensing system in the automated driving system of the vehicle includes several sensors for sensing information about an environment in which the vehicle is located. For example, the sensing system includes one or more of a positioning system (for example, the positioning system may be a global positioning system GPS, a BeiDou system, or another positioning system), an inertial measurement unit (inertial measurement unit, IMU), a radar, a laser rangefinder, a camera, and the like. In some possible embodiments, the camera in the sensing system may be further configured to monitor an occupant to obtain an occupant status, and a driving speed of the vehicle may be accurately obtained based on the positioning system and the IMU. It may be understood that the sensing system may communicate with a processing apparatus in the vehicle in a wired and/or wireless manner. The processing apparatus may be, for example, a software and hardware integrated platform supporting vehicle body control and chassis control, for example, a vehicle domain controller (vehicle domain controller, VDC), or may be a software and hardware integrated platform, namely, a vehicle-mounted computing platform, for supporting intelligent driving, for example, a mobile data center (mobile data center, MDC), an advanced driver assistance system domain controller (advanced driver assistance system domain controller, ADAS DC), or an automated driving domain controller (automated driving domain controller, AD DC).

A data monitoring method provided in embodiments of this application may be applied to the foregoing network-side device or vehicle.

For example, a preset condition that a vehicle should meet to enable a vehicle function on a target road section is obtained, where the preset condition includes a preset element and a requirement description of the element; a current status of the element is collected at a preset frequency; and the preset frequency is adjusted based on a result obtained by the collecting.

The data monitoring system shown in FIG. 1 may be applied to a plurality of network types, for example, may be applied to one or more of the following network types: SparkLink (SparkLink), a long term evolution (long term evolution, LTE) network, a fifth generation mobile communication technology (5^{th} generation mobile communication technology, 5G), a wireless local area network (for example, Wi-Fi), Bluetooth (Bluetooth, BT), ZigBee (ZigBee), or a vehicle-mounted short-range wireless communication network.

It should be noted that FIG. 1 is merely an example diagram of the architecture, but a quantity of network elements included in the system shown in FIG. 1 is not limited. Although not shown in FIG. 1, another functional entity may be included in FIG. 1 in addition to the functional entities shown in FIG. 1. In addition, the method provided in embodiments of this application may be applied to the system shown in FIG. 1. Certainly, the method provided in embodiments of this application may also be applied to another data monitoring system. This is not limited in embodiments of this application.

FIG. 2 is a flowchart of a data monitoring method according to an embodiment of this application. The method is applied to a first device, and the first device may be, for example, the vehicle, the network-side device, or the processing apparatus in the vehicle shown in FIG. 1. The method includes but is not limited to the following steps.

S201: Obtain a preset condition that a vehicle should meet to enable a vehicle function on a target road section, where the preset condition includes a preset element and a requirement description of the element.

For example, the element may be understood as an attribute, a status, or the like that is associated with the vehicle function.

In an implementation, the vehicle function includes but is not limited to an automated driving function and an assisted driving function.

In an implementation, the preset condition is an operational design condition ODC or an operational design domain ODD.

For example, when the preset condition is an operational design domain (operational design domain, ODD), the ODD may be classified into a "static entity", an "environmental condition", and a "dynamic entity". Elements belonging to the "static entity" include but are not limited to at least one ODD element of a road type, a road surface, road geometry, lane intersection, a lane feature, a traffic sign, a road edge, a road facility, and the like. Elements belonging to the "environmental condition" include but are not limited to at least one ODD element of weather, illumination, connectivity, and the like. Elements belonging to the "dynamic entity" include but are not limited to at least one ODD element of a traffic status, a road user, a non-road user, and the like. In some possible embodiments, an ODD element may alternatively be obtained in a finer division manner than the above.

Herein, the operational design domain ODC includes the ODD, an occupant status, a vehicle status, and another necessary condition. For example, when the preset condition is the operational design domain ODC, in addition to the ODD element, elements in the preset condition include elements corresponding to the occupant status, the vehicle status, and the another necessary condition.

For example, the requirement description of the element may be understood as a constraint, a requirement, or a limitation on the element. The requirement description of the element may be represented by a text description, a value, a value range, a character, a character string, a character string set, a discrete value set, or another manner.

For example, when a vehicle function A is enabled, a requirement description of an element "visibility" is "≥ 2 km", a requirement description of an element "lane feature" is "clear marking", a requirement description of an element "lane direction" is "drive on the right", a requirement description of an element "raining" is "daily precipitation ≤ 10 mm ", and a requirement description of an element "road user" is "no pedestrian".

It may be understood that the preset condition is preset information, and the preset condition corresponds to the vehicle function and the target road section.

For example, the preset condition may be obtained by the first device by searching a prior database based on a relationship of mapping between a vehicle function used by the vehicle and a feature of the target road section. The feature of the target road section may be, for example, geographical location information of the target road section or an indicator of the target road section. The prior database may be pre-stored locally in the first device, or may be obtained by the first device from another device (for example, a cloud server). For example, the prior database may be developed and obtained based on expert experience and/or a designer of an automated driving system. In some possible embodiments, the preset condition may alternatively be obtained by the first device from another device, for example, a network-side device.

Herein, the target road section may be, for example, at least one section of a highway or at least one section of an urban expressway, or may be at least one section of a road from a current location of the vehicle to a parking space in an outdoor parking lot, or at least one section of a road from a current location of the vehicle to a parking space in an indoor parking lot.

S202: Collect a current status of the element at a preset frequency.

Herein, the preset frequency is a collection frequency preset for the element.

In an implementation, the element includes a first element and a second element, the preset frequency includes a first frequency and a second frequency, and the first frequency is different from the second frequency; and collecting the current status of the element at the preset frequency includes: collecting a current status of the first element at the first frequency, and collecting a current status of the second element at the second frequency.

In other words, different elements may correspond to different preset frequencies. This can better comply with a change characteristic of an element, saves resources (for example, a computing resource and a storage resource), and helps improve monitoring efficiency of the element.

For example, elements may be classified into three types: a low-frequency monitored element, an intermediate-frequency monitored element, and a high-frequency monitored element. The low-frequency monitored element includes, for example, one or more of a road type (an urban road, a road, a parking lot, or the like), a road surface (asphalt, cement, paving stones, earth, or the like), a lane feature (a quantity of lanes, a lane width, a lane direction, or the like), a road facility (a bridge, a toll station, or a tunnel), weather (a wind speed, visibility, a rainy day, a snowy day, or the like), and intensity of illumination. The intermediate-frequency monitored element includes one or more of road geometry (uphill, downhill, horizontal, or the like), a traffic sign (a fixed sign, a temporary sign, a fixed signal light, a mobile signal light, or the like), a road edge (whether a boundary line is clear, whether there is a barrier cone or railing, or the like), connectivity (signal strength or the like), a vehicle function status (whether a perception function, a positioning function, a control function, a high-definition map function, a human-computer interaction function, a safety function, or the like is normal, whether a vehicle door is closed, or the like), and the like. The high-frequency monitored element includes one or more of a traffic status (a traffic condition, for example, presence of a preceding vehicle), a road user (a vehicle, a tricycle, a bicycle, a pedestrian, or the like), a non-road user (an animal, dropped cargo, dynamic road garbage, or the like), an occupant status (fatigue, attention, a pose, a safety belt status, or the like), a vehicle activation speed range, and the like. In embodiments of this application, frequencies at which the plurality of preset elements are monitored are not limited to the three frequencies, for example, may be two or more frequencies.

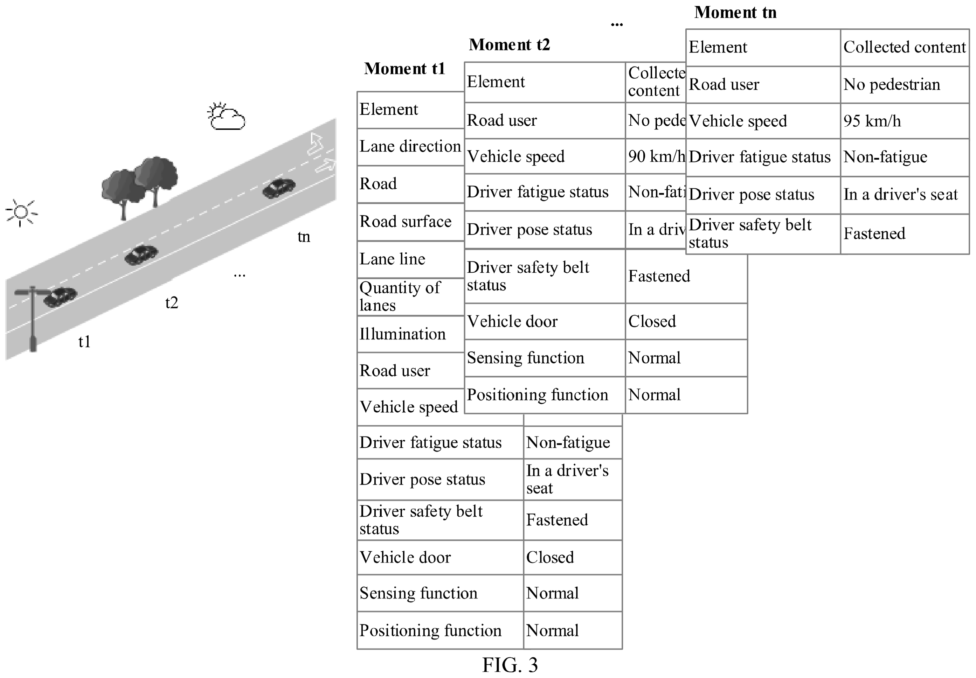

FIG. 3 is a diagram of a scenario according to an embodiment of this application. In FIG. 3, the vehicle travels on the target road section. It is assumed that elements in a preset condition that the vehicle should meet to enable a vehicle function A include: "lane direction", "road", "road surface", "lane line", "quantity of lanes", "illumination", "road user", "vehicle speed", "driver fatigue status", "driver pose status", "driver safety belt status", "vehicle door", "sensing function", and "positioning function". An example in which the first element is a "road user" and the second element is a "road surface" is used. It is assumed that in a process in which the vehicle travels on the target road section, a current status of the "road user" is collected at the first frequency, and a current status of the "road surface" is collected at the second frequency. The first frequency is greater than the second frequency. In an implementation, for the first element "road user", a status of the first element "road user" at each of a moment t1, a moment t2, ..., and a moment tn shown in FIG. 3 is collected. For the second element "road surface", only a status of the second element "road surface" at the moment t1, the moment t3, the moment t5, ... shown in FIG. 3 is collected. In other words, in a unit time, a quantity of times a status of the "road user" is collected is greater than a quantity of times a status of the "road surface" is collected.

It may be understood that, information obtained by collecting the current status of the element may be referred to as collected content of the element. For example, it may be learned from FIG. 3 that collected content of the element "vehicle speed" at the moment tn is "95 km/h".

In FIG. 3, the first device may summarize status information that is of elements and that is collected at a same moment to obtain running information corresponding to the moment, that is, may be represented as a table including a plurality of groups of "element-requirement description" correspondences. It may be learned that FIG. 3 shows running information corresponding to a plurality of moments, for example, running information 1 corresponding to the moment t1, running information 2 corresponding to the moment t2, ..., and running information n corresponding to the moment tn. Because different elements may correspond to different preset frequencies, it is possible that a status of an element A is collected but a status of an element B is not collected at a moment. Therefore, quantities of elements included in the running information corresponding to different moments may be different. For example, a quantity of elements included in the running information corresponding to the moment t1 is greater than a quantity of elements included in the running information corresponding to the moment t1. For details about elements collected at each moment and collected content of the elements at the moment, refer to FIG. 3. Details are not described herein again.

In some possible embodiments, when the first device collects the current status of the element at the preset frequency, the element A may not be collected at a moment (for example, a moment 1), but it is detected that the status of the element A changes at the moment 1. In this case, the first device may also collect the status of the element A at the moment 1. In this way, in the process in which the vehicle travels on the target road section, when a status of an element associated with the vehicle function suddenly changes at a moment, for example, temporary control information appears in front of a road, or weather suddenly changes from sunny to rainstorm, missing collection of an element associated with safety of the automated driving system can be effectively avoided while a monitoring level is improved as much as possible.

For example, when the current status of the element is collected at the preset frequency, the vehicle may travel on the target road section once, or may travel back and forth on the target road section for a plurality of times. This is not specifically limited herein.

In some possible embodiments, a manner of collecting the current status of the element includes but is not limited to one or more of the following: The first device collects the current status by using a sensing system in the automated driving system, the first device receives related information collected by a roadside device, the first device collects the current status by using a network-side device, the first device receives related information collected by a surrounding vehicle, and the like. That is, the collected information that is of the status of the element and that is obtained by the first device may be directly obtained by the first device from original data sent by another device at a corresponding moment, or may be collected by the first device in real time, and/or obtained by the first device by processing original data collected at a corresponding moment, and/or obtained by the first device by processing original data sent by another device at a corresponding moment. Herein, the another device may be, for example, at least one of a sensing system in the vehicle, a network-side device, a roadside device, and another vehicle.

S203: Adjust the preset frequency based on a result obtained by the collecting.

In this embodiment of this application, the result indicates a quantity of times a status of the element changes in a unit time, or indicates a priority of the element.

For example, the term "change" may be understood as that two adjacent statuses of the element that are collected in a unit time are different, or a difference between two adjacent statuses of the element that are collected in a unit time is greater than a preset difference threshold, or a status, of the element, collected in a unit time does not match a requirement description of the element.

In an implementation, the quantity of times the status of the element changes in the unit time may be a quantity of times the status of the element does not match the requirement description of the element in the unit time. Herein, the status of the element may also be understood as the collected content of the element.

For example, that the collected content of the element does not match the requirement description of the element may be any one of the following cases:
(1) The requirement description of the element and the collected content of the element are both values, and the requirement description of the element is not equal to the collected content of the element.
(2) The requirement description of the element and the collected content of the element are both character strings, and the requirement description of the element is different from the collected content of the element.
(3) The requirement description of the element is a first value range, the collected content of the element is a first value or a second value range, and the first value is not within the first value range or the second value range is not a subset of the first value range.
(4) The requirement description of the element is a first character string set, the collected content of the element is a first character string or a second character string set, and the first character string does not belong to the first character string set or the second character string set is not a subset of the first character string set.

In some possible embodiments, that the collected content of the element does not match the requirement description of the element may alternatively be as follows: The requirement description of the element and the collected content of the element are both characters, and the requirement description of the element is different from the collected content of the element; or the requirement description of the element and the collected content of the element are both texts, and the requirement description of the element is different from the collected content of the element.

For example, a current status of the element A is collected at the preset frequency in the unit time. It is assumed that the status of the element A is collected 10 times in the unit time, S indicates a quantity of times the status of the element does not match a requirement description of the element within the time, and an initial value of S is 0. Starting from a first time, if collected content that is of the element A and that is obtained at the first time does not match the requirement description of the element A, S is increased by 1; and so on. The determining is performed for a tenth time cyclically, to obtain the final S.

It may be understood that, if collected content of an element at a moment does not match a requirement description of the element, it indicates that the automated driving system of the vehicle on the target road section is currently not in a safe running range, and therefore, the automated driving system of the vehicle exits. Statistics on the quantity of times the status of the element does not match the requirement description of the element in the unit time are collected, to implement statistics on a reason why the automated driving system exits, so that a reference may be provided for adjusting a collection frequency of the element, to determine whether the current preset frequency of the element is proper.

In another implementation, the quantity of times the status of the element changes in the unit time may be a quantity of times a difference between two adjacent statuses of the element is greater than a preset difference value in the unit time. In this way, an element whose status changes greatly may be identified, and an element whose status changes frequently in a current unit time may be obtained based on the result obtained by the collecting.

For example, in the process in which the vehicle travels on the target road section, it is assumed that a status of the element A is collected for a plurality of times at a preset frequency in a unit time, to obtain collected content of the element A at each moment, and the collected content of the element A at each moment. It is assumed that a requirement description of the element A is a value range, and the collected content of the element A at each moment is within the value range. That is, the collected content of the element A at each moment matches the requirement description of the element A. However, the collected content of the element A at each moment presents a gradually increasing trend, a gradually decreasing trend, or a large change amplitude, and may exceed the requirement description of the element A at any time. In this case, statistics on a quantity of times a difference between two adjacent statuses of the element A is greater than a preset difference value in a unit time range are collected. If it is further determined that the quantity of times is Inefficient, the preset frequency of the element A should be adjusted.

In an implementation, adjusting the preset frequency based on the result obtained by the collecting includes: if the result corresponding to the element does not meet a condition corresponding to the preset frequency, adjusting the preset frequency.

For example, the preset frequency is the first frequency before the adjustment; and the preset frequency is the second frequency after the adjustment.

For example, the condition corresponding to the preset frequency is a first threshold range. If the result corresponding to the element is less than a lower limit value of the first threshold range, the preset frequency is decreased; or if the result corresponding to the element is greater than an upper limit value of the first threshold range, the preset frequency is increased.

For example, the condition corresponding to the preset frequency is a target threshold. If the result corresponding to the element is less than the target threshold, the preset frequency is decreased; or if a comparison result of the element is greater than the target threshold, the preset frequency is increased.

Refer to Table 1. Table 1 shows results that are obtained based on the collected content of the plurality of elements shown in FIG. 3 at the plurality of moments and that correspond to the elements. It is assumed that the result indicates a quantity of times a status of an element changes in a unit time. Herein, the plurality of elements include "lane direction", "road", "road surface", "lane line", "quantity of lanes", "illumination", "road user", "vehicle speed", "driver fatigue status", "driver pose status", "driver safety status", "vehicle door", "sensing function", and "positioning function". Table 1 mainly shows a correspondence between an element and a result corresponding to the element. A correspondence "vehicle speed-3" is used as an example, and indicates that a result corresponding to the element "vehicle speed" is 3. Descriptions of remaining correspondences in Table 1 are not described herein again.

**Table 1**

| Preset frequency | Preset priority | Element | Result |
|---|---|---|---|
| Frequency 1 (Low frequency) | 1 | Lane direction | 0 |
| | 2 | Road | 0 |
| | 3 | Road surface | 0 |
| | 4 | Lane line | 3 |
| | 5 | Quantity of lanes | 0 |
| | 6 | Illumination | 2 |
| Frequency 2 (Intermediate frequency) | 7 | Vehicle door | 0 |
| | 8 | Sensing function | 0 |
| | 9 | Positioning function | 0 |
| Frequency 3 (High frequency) | 10 | Road user | 6 |
| | 11 | Vehicle speed | 3 |
| | 12 | Driver fatigue status | 3 |
| | 13 | Driver pose status | 0 |
| | 14 | Driver safety belt status | 0 |

It should be noted that Table 1 is merely used as an example to reflect a correspondence between an element and a result. During actual application, text content and a storage manner of the correspondence in Table 1 may alternatively be in another form. For example, Table 1 may alternatively reflect a correspondence among a preset frequency, an element, and a result. As shown in a leftmost dashed line column in Table 1, preset frequencies of first six elements (that is, "lane direction", "road", "road surface", "lane line", "quantity of lanes", and "illumination") are all the frequency 1, preset frequencies of middle three elements (that is, "vehicle door", "sensing function", and "positioning function") are all the frequency 2, and preset frequencies of last five elements (that is, "road user", "vehicle speed", "driver fatigue status", "driver pose status", and "driver safety status") are all the frequency 3. It is assumed that the frequency 3 is greater than the frequency 2, and the frequency 2 is greater than the frequency 1.

For example, based on Table 1, it is assumed that a condition corresponding to the frequency 1 is "0", a condition corresponding to the frequency 2 is " (0, 2]", and a condition corresponding to the frequency 3 is "[3, ∞)". The correspondence "lane line-3" in Table 1 is used as an example. It may be learned that a preset frequency of the element "lane line" is the frequency 1, and a result corresponding to "lane line" is 3. The result does not meet the condition 0 corresponding to the frequency 1, so that the preset frequency of "lane line" needs to be adjusted. It is determined, based on the result corresponding to "lane line", that the result corresponding to "lane line" is greater than 0 and meets the condition corresponding to the frequency 3. Therefore, it is determined that the preset frequency of "lane line" is adjusted from the frequency 1 to the frequency 3.

For another example, for the correspondence "driver pose status-0" in Table 1, it may be learned that a preset frequency of the element "driver pose status" is the frequency 3, and a result corresponding to "driver pose status" is 0. The result does not meet the condition [3, ∞) corresponding to the frequency 3, so that the preset frequency of "driver pose status" needs to be adjusted. It is determined, based on the result corresponding to "driver pose status", that the result corresponding to "driver pose status" is less than a lower limit value of [3, ∞) and meets the condition 0 corresponding to the frequency 1. Therefore, it is determined that the preset frequency of "driver pose status" is adjusted from the frequency 3 to the frequency 1.

Correspondingly, based on results corresponding to the elements shown in Table 1, it may be further determined that preset frequencies of the following elements need to be adjusted: A preset frequency of the element "illumination" is adjusted from the frequency 1 to the frequency 2, preset frequencies of the elements "vehicle door", "sensing function", and "positioning function" are adjusted from the frequency 2 to the frequency 1, and a preset frequency of the element "driver safety belt status" is adjusted from the frequency 3 to the frequency 1.

It may be understood that, when the result indicates the priority of the element, the foregoing manner of adjusting the preset frequency is also applicable.

In this case, a manner of obtaining the priority of the element is specifically described as follows:
Herein, the priority, of the element, indicated by the result may be understood as a comprehensive priority of the element.

For example, in a process of collecting the current status of the element at the preset frequency, the automated driving system of the vehicle may be started N times, where N is a positive integer, and the N times of startup correspond to N groups of priority information. An i^{th} group of priority information indicates respective priorities of the foregoing preset plurality of elements when the automated driving system is started for an i^{th} time. The element A is used as an example. That is, the element A may have a plurality of priorities. In this case, a comprehensive priority of each element may be obtained through statistics collection based on the N groups of priority information. For example, the N groups of priority information may alternatively be obtained in the process of collecting the status of the element at the preset frequency.

Herein, the i^{th} group of priority information corresponding to the i^{th} startup of the automated driving system may be set by the automated driving system by default, or may be set by a user of the vehicle. The user of the vehicle may be, for example, a driver of the vehicle, an owner of the vehicle, or a person that can use the vehicle.

For example, comprehensive priorities of the foregoing preset plurality of elements are obtained through statistics collection based on the N groups of priority information. The first element is used as an example for description. A priority statistical value of the first element is obtained based on a priority of the first element in each of the N groups of priority information. The priority statistical value of the first element may be a mean, a mode, a median, or the like. In this way, respective priority statistical values of the foregoing plurality of elements may be obtained, and the respective priority statistical values of the plurality of elements are sorted in an ascending or descending sequence, to obtain respective comprehensive priorities of the foregoing plurality of elements.

In an implementation, it is assumed that a preset frequency of the first element is the first frequency. If a priority that is of the element and that is indicated by the result corresponding to the first element does not belong to a preset priority range corresponding to the first frequency, the preset frequency of the first element needs to be adjusted.

For example, the preset priority range corresponding to the first frequency is obtained based on a preset priority of an element whose preset frequency is the first frequency in the foregoing plurality of preset elements. Herein, preset priorities of the foregoing plurality of preset elements may be set based on experience or specified by a designer of the automated driving system.

Herein, different preset frequencies correspond to different preset priority ranges, and there is no intersection between the preset priority ranges corresponding to the different preset frequencies.

For example, the preset priority of the first element may indicate, for example, a processing sequence of the first element in the plurality of preset elements or an importance degree of the first element in the plurality of preset elements.

For example, refer to the preset priority of each element shown in a second dashed line column in Table 1. It may be learned that a preset priority range corresponding to the frequency 1 is [1, 6], a preset priority range corresponding to the frequency 2 is [7, 9], and a preset priority range corresponding to the frequency 3 is [10, 14]. It may be learned from Table 1 that preset priorities of elements of a same preset frequency may be consecutive values. In some possible embodiments, values of the preset priorities may alternatively be taken in an ascending or descending sequence at intervals. This is not specifically limited herein. It may be further learned from Table 1 that a preset priority of an element with a high preset frequency is higher than a preset priority of an element with a low preset frequency. In some possible embodiments, a preset priority of an element with a high preset frequency may alternatively be lower than a preset priority of an element with a low preset frequency. This is not specifically limited herein.

For example, based on Table 1, it is assumed that the first element is "illumination", and the first frequency is the frequency 1. It is assumed that a result corresponding to the first element indicates that a priority of the first element is "7". The priority does not meet the preset priority range [1, 6] corresponding to the frequency 1, but belongs to the preset priority range [7, 9] corresponding to the frequency 2. Therefore, it is determined that the preset frequency of "illumination" is adjusted from the frequency 1 to the frequency 2. If the result corresponding to the first element indicates that the priority of the first element is "6", the priority still belongs to the preset priority range [1, 6] corresponding to the frequency 1, and therefore, the preset frequency of "illumination" does not need to be adjusted.

In some possible embodiments, the preset frequency of the first element may alternatively be adjusted based on a quantity of times the status of the first element changes in a unit time and a comprehensive priority of the first element.

For example, it is assumed that it is determined, based on the quantity of times the status of the first element changes in the unit time, that the preset frequency of the first element is adjusted from the frequency 1 to the frequency 2, and it is determined, based on the comprehensive priority of the first element, that the preset frequency of the first element is adjusted from the frequency 1 to the frequency 2. In this case, the preset frequency of the first element is adjusted to the frequency 2.

For another example, it is assumed that it is determined, based on the quantity of times the status of the first element changes in the unit time, that the preset frequency of the first element is adjusted from the frequency 1 to the frequency 2, and it is determined, based on the comprehensive priority of the first element, that the preset frequency of the first element is adjusted from the frequency 1 to the frequency 3. In this case, an adjustment policy may be further set, to determine an adjustment manner of the preset frequency of the first element. In this way, a proper collection frequency is determined for the first element from a plurality of dimensions, for example, a comparison result of the first element and the comprehensive priority of the first element. This implements precise adjustment of the collection frequency of the element.

In some possible embodiments, the first device may further control display of the result obtained by the collecting. For example, a display is controlled to display the result. Herein, the display may be a display screen, and the display screen may be a liquid crystal display (liquid crystal display, LCD), an organic or inorganic light-emitting diode (organic light-emitting diode, OLED), an active-matrix organic light-emitting diode panel (active-matrix organic light-emitting diode, AMOLED), or the like. When the first device is a vehicle, the display may alternatively be an in-vehicle infotainment tablet, a vehicle-mounted display, a head-up display (head-up display, HUD) system, or the like.

In an implementation, adjusting the preset frequency based on the result obtained by the collecting may be performed by the first device itself. In this way, the preset frequency of the element may be directly adjusted. This helps improve monitoring efficiency of the element.

In another implementation, adjusting the preset frequency based on the result obtained by the collecting includes: sending adjustment information, where the adjustment information indicates to adjust the preset frequency based on the result obtained by the collecting, and the adjustment information includes the result. For a manner of adjusting the preset frequency, refer to the foregoing description of corresponding content. Details are not described herein again. In this way, the adjustment information is sent to indicate a device other than the first device to adjust the preset frequency of the element. For example, a transmit end of the adjustment information is a network-side device. That is, the network-side device undertakes a task of obtaining the result through computing. In this case, an execution device for adjusting the preset frequency only needs to serve as a receive end of the adjustment information. This helps save computing resources of the execution device.

It may be learned that a comparison between collected content of an element associated with the vehicle function of the vehicle on the target road section and a requirement description of the element is analyzed, to implement adaptive adjustment of a collection frequency of the element. This not only helps improve safety of the automated driving system, but also helps save resources, and improves collection efficiency and a monitoring level of the element.

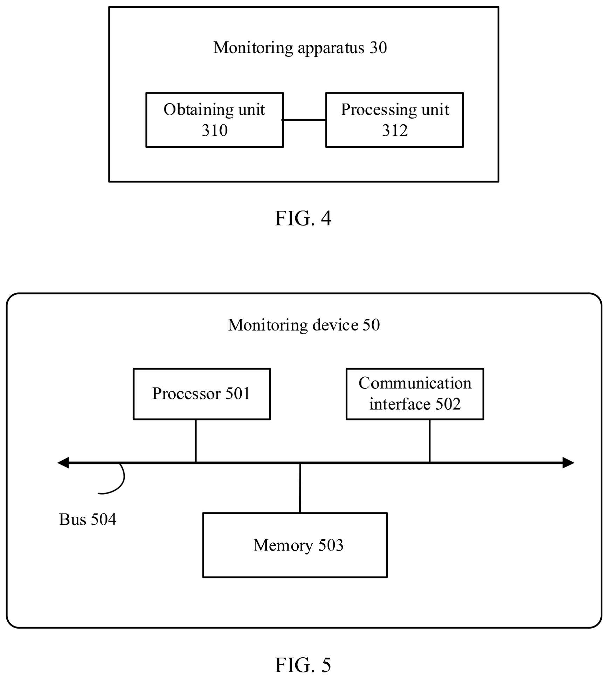

FIG. 4 is a diagram of a structure of a monitoring apparatus according to an embodiment of this application. The monitoring apparatus 30 includes an obtaining unit 310 and a processing unit 312. The monitoring apparatus 30 may be implemented by hardware, software, or a combination of software and hardware.

The obtaining unit 310 is configured to obtain a preset condition that a vehicle should meet to enable a vehicle function on a target road section, where the preset condition includes a preset element and a requirement description of the element. The processing unit 312 is configured to: collect a current status of the element at a preset frequency, and adjust the preset frequency based on a result obtained by the collecting.

The monitoring apparatus 30 may be configured to implement the method described in the embodiment in FIG. 2. In the embodiment in FIG. 2, the obtaining unit 310 may be configured to perform S201, and the processing unit 312 may be configured to perform S202 and S203.

It should be understood that division into the units of the foregoing monitoring apparatus 30 is merely logical function division. During actual implementation, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the units. All units of the foregoing apparatus may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It may be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

FIG. 5 is a diagram of a structure of a monitoring device according to an embodiment of this application. As shown in FIG. 5, the monitoring device 50 includes a processor 501, a communication interface 502, a memory 503, and a bus 504. The processor 501, the memory 503, and the communication interface 502 communicate with each other through the bus 504. It should be understood that quantities of processors and memories in the monitoring device 50 are not limited in this application.

In an implementation, the monitoring device 50 may be the foregoing network-side device, a vehicle, or a processing apparatus in a vehicle. For details, refer to descriptions of corresponding content in FIG. 1.

In another implementation, the monitoring device 50 may be the foregoing roadside device. Refer to related descriptions of the roadside device in FIG. 1. Details are not described herein again.

The bus 504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 5, but this does not mean that there is only one bus or only one type of bus. The bus 504 may include a path for transmitting information between components (for example, the memory 503, the processor 501, and the communication interface 502) of the monitoring device 50.

For the processor 501, refer to the related descriptions of the processor in the foregoing embodiment. Details are not described herein again.

The memory 503 is configured to provide storage space, and the storage space may store data such as an operating system and a computer program. The memory 503 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 503 may exist independently, or may be integrated into the processor 501.

The communication interface 502 may be configured to provide an information input or output for the processor 501. Alternatively, the communication interface 502 may be configured to receive data sent from the outside and/or send data to the outside, and may be a wired link interface including an Ethernet cable or the like, or may be a wireless link (for example, Wi-Fi, Bluetooth, or universal wireless transmission) interface. Alternatively, the communication interface 502 may further include a transmitter (for example, a radio frequency transmitter or an antenna), a receiver, or the like coupled to the interface.

The processor 501 in the monitoring device 50 is configured to read the computer program stored in the memory 503, to perform the foregoing method.

In a possible design manner, the monitoring device 50 may be one or more modules in an entity for executing the method shown in FIG. 2, and the processor 501 may be configured to read one or more computer programs stored in the memory, and is configured to perform the following operations:
obtaining a preset condition that a vehicle should meet to enable a vehicle function on a target road section, where the preset condition includes a preset element and a requirement description of the element;
collecting a current status of the element at a preset frequency; and
adjusting the preset frequency based on a result obtained by the collecting.

In the foregoing embodiments in this specification, the descriptions of embodiments have respective focuses. For a part that is not described in detail in an embodiment, refer to related descriptions in other embodiments. In addition, in embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

It should be noted that a person of ordinary skill in the art may learn that all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods described in embodiments of this application.

## Claims

1. A data monitoring method, wherein the method comprises:
obtaining a preset condition that a vehicle should meet to enable a vehicle function on a target road section, wherein the preset condition comprises a preset element and a requirement description of the element;
collecting a current status of the element at a preset frequency; and
adjusting the preset frequency based on a result obtained by the collecting.

2. The method according to claim 1, wherein the vehicle function is an automated driving function or an assisted driving function.

3. The method according to claim 1 or 2, wherein the preset condition is an operational design condition ODC or an operational design domain ODD.

4. The method according to any one of claims 1 to 3, wherein the result indicates a quantity of times a status of the element changes in a unit time, or indicates a priority of the element.

5. The method according to any one of claims 1 to 4, wherein the element comprises a first element and a second element, and the preset frequency comprises a first frequency and a second frequency that are different; and collecting the current status of the element at the preset frequency comprises:
collecting a current status of the first element at the first frequency, and collecting a current status of the second element at the second frequency.

6. The method according to any one of claims 1 to 5, wherein adjusting the preset frequency based on the result obtained by the collecting comprises:
sending adjustment information, wherein the adjustment information indicates to adjust the preset frequency based on the result obtained by the collecting, and the adjustment information comprises the result.

7. A data monitoring apparatus, wherein the apparatus comprises:
an obtaining unit, configured to obtain a preset condition that a vehicle should meet to enable a vehicle function on a target road section, wherein the preset condition comprises a preset element and a requirement description of the element; and
a processing unit, configured to: collect a current status of the element at a preset frequency, and adjust the preset frequency based on a result obtained by the collecting.

8. The apparatus according to claim 7, wherein the vehicle function is an automated driving function or an assisted driving function.

9. The apparatus according to claim 7 or 8, wherein the preset condition is an operational design condition ODC or an operational design domain ODD.

10. The apparatus according to any one of claims 7 to 9, wherein the result indicates a quantity of times a status of the element changes in a unit time, or indicates a priority of the element.

11. The apparatus according to any one of claims 7 to 10, wherein the element comprises a first element and a second element, and the preset frequency comprises a first frequency and a second frequency that are different; and the processing unit is specifically configured to:
collect a current status of the first element at the first frequency, and collect a current status of the second element at the second frequency.

12. The apparatus according to any one of claims 7 to 11, wherein the processing unit is specifically configured to:
send adjustment information, wherein the adjustment information indicates to adjust the preset frequency based on the result obtained by the collecting, and the adjustment information comprises the result.

13. A data monitoring apparatus, wherein the apparatus comprises at least one processor and a communication interface, the communication interface is configured to receive and/or send data, and/or the communication interface is configured to provide an input and/or output for the processor; and
the at least one processor is configured to implement the method according to any one of claims 1 to 6.

14. A vehicle, wherein the vehicle comprises the apparatus according to any one of claims 7 to 12 and an automated driving system.

15. A computer-readable storage medium, wherein the computer-readable storage medium stores instructions, and when the instructions are run on at least one processor, the method according to any one of claims 1 to 6 is implemented.
